# EUROPEAN PATENT APPLICATION

(11) **EP 4 576 478 A1**
(43) Date of publication of application: **25.06.2025**
(21) Application number: 23218188.3
(22) Date of filing: 19.12.2023
(51) Int. Cl.: H02J 3/14

(54) **METHOD FOR MODULATING THE POWER DRAWN BY A WATER ELECTROLYSIS INSTALLATION AND ELECTROLYSIS INSTALLATION EMPLOYING SUCH A METHOD**

(71) Applicant: McPhy Energy, 90150 Foussemagne (FR)
(72) Inventor: PERROY, Edouard, 73000 CHAMBERY (FR)
(74) Representative: IP Trust

(57) **Abstract**

The invention relates to a water electrolysis installation (P) comprising a plurality of electrolysis clusters (Ci) operated at respective electrical power setpoints (Pⁱₖ). The installation comprises and a supervision unit (SU) for operating the installation (P) according to an electrical network flexibility signal (FSₖ), the supervision unit (SU) comprising a modulation controller (MOD) for modulating synchronously the electrical power drawn by the installation (P) from an electrical network (NET) according to a preset arrangement, a priority sequencer (SEQ) to establish the preset arrangement asynchronously to the modulation controller (MOD), and a regulator module (REG) to regulate the actual power (Pₖ) drawn by the installation.

## Description

### FIELD OF THE INVENTION

The present invention relates to a method for modulating an electrical power drawn from an electrical network by a water electrolysis installation. The invention also relates to an electrolysis installation employing such a method.

### BACKGROUND OF THE INVENTION

Gaseous hydrogen can be produced by water electrolyzers such as alkaline water electrolyzers, PEM water electrolyzers or solid oxide water electrolyzers. In such systems, hydrogen is produced in an electrolysis cell by passing a direct current through an electrolyte located between two electrodes. Unit cells are usually stacked to multiply the electrolysis reaction and the amount of hydrogen produced is generally proportional to the DC current passing through the stack.

Existing water electrolysis installations generally aim to maximize hydrogen production with a minimum of energy consumption. Each stack is designed for a steady current input that provides the maximum hydrogen flow rate with reasonable overall energy efficiency.

Large-scale and low-cost production of hydrogen using water electrolysis can be achieved in an installation connected to the electrical network (i.e. the grid) and dimensioned to reach tens of MW, hundreds of MW or even more. Such an installation may combine several independently controllable electrolysis clusters. Each cluster may comprise, for example, a plurality of electrolysis stacks, a transformer & rectifier unit to supply the stacks with direct current, and an electrolysis process unit to collect and separate the gas produced by the stacks.

Such a large installation is expected to provide energy flexibility to the electrical network to which it is connected and to meet that network's requirements: grid services such as primary, secondary or tertiary reserves, network congestion management, direct connection to renewables through a microgrid, monitoring of power purchase agreements, energy price optimization, etc.

These applications require the control of the active power consumed by the installation on the electrical network and therefore the control of the current flowing through the electrolysis stacks of the installation, with an objective that may be different from the sole criterion of energy efficiency.

### OBJECT OF THE INVENTION

In this context, there is a need to provide a control system for a water electrolysis installation capable of dynamically modulating the power drawn from the electrical network and, accordingly, capable of managing the operation of the electrolysis clusters making up the installation.

### SUMMARY OF THE INVENTION

To this effect, the invention relates to a water electrolysis installation connected to an electrical network, the installation comprising a plurality of electrolysis clusters operated at respective electrical power setpoints, and a supervision unit for operating the installation according to an electrical network flexibility signal, the supervision unit comprising:
- a modulation controller for modulating synchronously the electrical power drawn by the installation from the electrical network, the modulation controller comprising:
   i. A conversion module configured for determining in a first step, from the flexibility signal, a target modulated power of the installation;
   ii. A selector module configured for executing a second step of selecting at least one cluster and of applying a modulated power setpoint to the selected cluster(s) according to a preset arrangement ;
- a priority sequencer to establish, asynchronously to the modulation controller, the preset arrangement; and
- a regulator module to regulate the actual power drawn by the installation.

According to further non-limiting features of the invention, either taken alone or in any technically feasible combination:
- the selector module is also configured for selecting the preset arrangement among a plurality of preset arrangements;
- the priority sequencer defines the electrolysis clusters being part of the plurality of preset arrangements;
- the priority sequencer defines the order of the electrolysis clusters being part of the plurality of preset arrangements;
- the priority sequencer defines the weight of each electrolysis clusters being part of the plurality of preset arrangements;
- the priority sequencer comprises an optimization module to prepare the plurality of preset arrangements based on predefined performance indices of the installation;
- the priority sequencer comprises a scheduler associated to the optimization module to store the plurality of preset arrangements;
- the plurality of preset arrangements comprises:
   o a slow mode of operation in which the clusters are successively selected and the current electrical power setpoints are successively modified to match the target electrical power; and
   o a fast mode of operation in which the clusters are simultaneously selected and the current electrical power setpoints are simultaneously modified to match the target electrical power;
- the selector module is configured for selecting the preset arrangement according to a gradient signal;
- the first step comprises applying a gain or a transfer function to the flexibility signal to determine the target modulated power of the installation;
- the flexibility signal is provided by an operator of the electrical network;
- the flexibility signal is established from an electrical signal provided by the electrical network;
- the regulator module uses a measure of the actual power drawn by the installation.

According to another aspect, the invention proposes a method for modulating an electrical power drawn from an electrical network by a water electrolysis installation, the installation comprising a plurality of electrolysis clusters operated at respective electrical power setpoints, and a supervision unit for operating the installation according to an electrical network flexibility signal, the method comprising :
- modulating synchronously, by a modulation controller of the supervision unit, the electrical power drawn by the installation from the electrical network by :
   i. determining, in a first step, from the flexibility signal, a target modulated power of the installation;
   ii. executing a second step of selecting at least one cluster and of applying a modulated power setpoint to the selected cluster(s) according to a preset arrangement;
- establishing, by a priority sequencer of the supervision unit (SU), the preset arrangement asynchronously to the modulation of the electrical power drawn by the installation; and
- regulating, by a regulator module of the supervision unit (SU), the actual power drawn by the installation.

### FIGURES

Many other features and advantages of the present invention will become apparent from reading the following detailed description, when considered in conjunction with the accompanying drawings, in which:
- Figure 1 illustrates a water electrolysis installation according to the invention;
- Figure 2 illustrates an electrolysis cluster of a water electrolysis installation according to the invention;
- Figure 3 illustrates a supervision unit of a water electrolysis installation according to the invention;
- Figure 4 illustrates two preset arrangements.

### DETAILED DESCRIPTION OF A SPECIFIC EMBODIMENT OF THE INVENTION

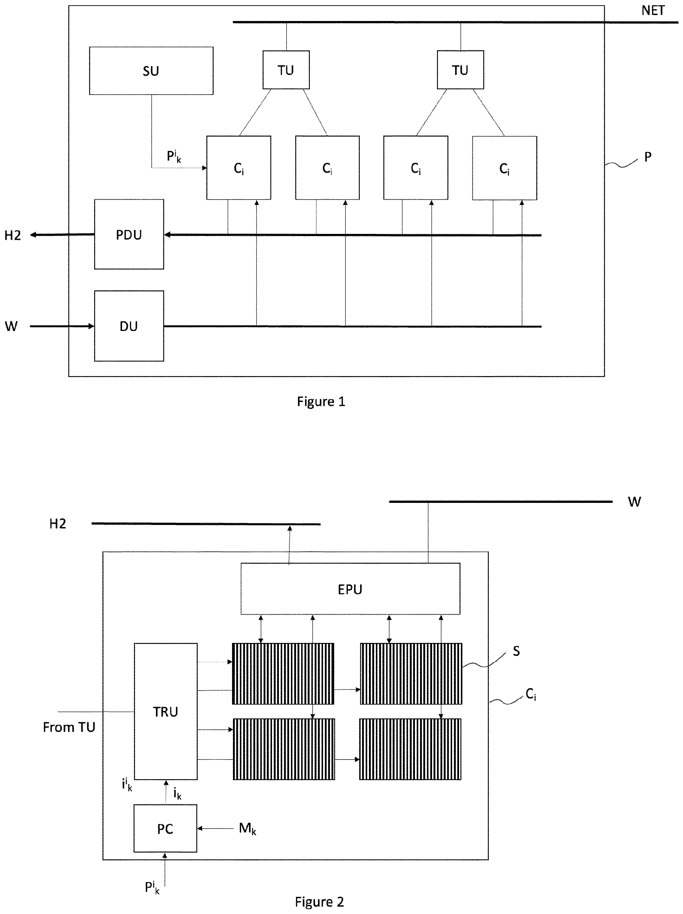

Figure 1 represents an exemplary water electrolysis installation P compatible with the present invention. The installation P is producing hydrogen H2 from feed water W.

The installation P is connected to an electrical network NET that may correspond, for instance, to a national or continental electrical grid. It may also be a local network ("micro-grid") connecting the water electrolysis installation to, for instance, a renewable power station, such as a wind farm, a photovoltaic, a hydroelectric or marine power plant.

The electrical power is typically distributed to the installation P by high voltage or medium voltage (greater than 20kV) AC transmission lines, but the invention is not limited to such a configuration and encompasses any installation powered by any type of electrical distribution.

In the installation P represented on figure 1, two transformer units TU are connected to the electrical network NET. Each transformer unit TU provides the working electrical power to a plurality of water electrolysis clusters C to which it is connected. Transformer units TU may comprise high voltage or medium voltage (e.g. greater than 20kV) to low voltage (e.g. around 400V) transformers and switchgears as this is well known in the art. More generally, an installation P according to the invention may comprise one or more transformer unit TU or may be directly connected to a medium or low-voltage network such that a transformer unit TU is not necessary.

The feed water W provided to the installation P is treated by a demineralization and purification unit DU to remove excessive concentration of minerals and to provide appropriate water quality in the electrolyte fed in the electrolysis stacks. The demineralization and purification unit DU may include several purifying steps, including for instance activated coal filters, reverse osmosis and electro deionization of the feed water.

The hydrogen provided by the electrolysis clusters C are collected and treated by a purification and drying unit PDU of the installation P. The installation P may be provided with a plurality of such units, although it is usually beneficial to mutualize this treatment across the largest number of electrolysis clusters C. The purification and drying unit PDU purify the wet hydrogen exiting the electrolysis clusters C to bring it at the required level of purity, for instance up to 99% or greater, by removal of residual oxygen and water. This can be performed by the catalytic combustion of the residual oxygen with the hydrogen, and by using absorbent beds to remove water through temperature swing adsorption for instance.

The hydrogen provided by the purification and drying unit PDU may be compressed, stored, injected into hydrogen pipeline for its distribution or used by any other means.

The installation P may comprise other mutualized auxiliaries than the purification and drying unit PDU and transformer units TU that serve the plurality of electrolysis clusters C.

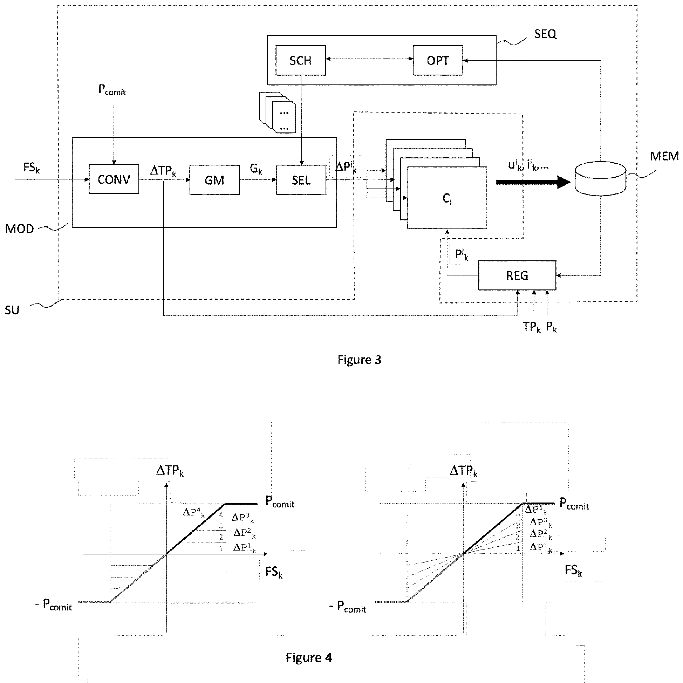

The installation P is operated by a supervision unit SU, which will be described in more detail in a later section of this description. In particular, the supervision unit SU supplies the electrical power setpoints to the various electrolysis clusters C of the installation P. The supervision unit can be formed by a computer system comprising one or more processing units connected to one or more memory units, as is known in the art. Each element of the installation P is equipped with appropriate sensors to provide the data necessary for operating the installation, and the collected data are stored in a memory space of the supervision unit SU (referenced as MEM in figure 3).

According to an important aspect of the invention, the installation P combines several electrolysis clusters Ci which can be operated independently of each other by the supervision unit SU. Each electrolysis cluster Ci comprises at least one electrolysis stack S (4 in the example of Figure 2) which decomposes the electrolyte supplied into oxygen and hydrogen. As mentioned in the introduction, a stack S is formed by a large number of electrolysis unit cells, each cell realizing the electrochemical reaction by passing a direct current through the electrolyte located between two electrodes. The unit cells and the electrolysis stack can implement any type of electrolysis, e.g. alkaline water electrolysis, PEM electrolysis or solid oxide electrolysis. A stack can be sized to provide a rated power typically comprised between 500 kW and 6 MW.

Depending on the number of stacks S in a cluster Ci, such a cluster can therefore have a rated power typically comprised between 500 kW and 50 MW, and generally selected between 1 MW and 5 MW.

With reference to figure 2, each cluster Ci comprises a transformer & rectifier unit TRU to supply the stacks S with direct current at the right level of intensity and voltage. The transformer (of oil or dry type for instance) converts, if necessary, the power provided by the installation transformer unit TU of the installation into about 400V level generally used for operating a stack S. The transformer may be provided with multiple secondary circuit to be associated to the plurality of stacks S, if the cluster indeed include such a plurality of stacks S. Rectifiers (for instance of the thyristor of IGBT type) are disposed downstream of the transformer in the transformer & rectifier unit TRU to provide the operating DC current to the stacks S.

Each cluster Ci also comprises (or is associated to) a power controller PC, connected on one side to the supervision unit SU and on the other side to the transformer & rectifier unit TRU. The power converter PC also receives measures Mₖ collected in the clusters, such as the current and voltage measurement of each stacks S of the cluster Ci. The power controller PC forms a feedback controller (s simple PID controller or a more complex multivariable feedback controller) that establishes and provides to the transformer & rectifier unit TRU the current setpoints iₖ that should be applied to the stacks S, based on the measures Mₖ, for operating the cluster at the cluster power setpoints Pⁱₖ imposed by the supervision unit SU.

Although the power controllers PC have been presented as being incorporated into each electrolysis cluster Ci, they may instead be considered part of the supervision unit SU. In all cases, each cluster Ci of the installation P is associated to a power controller PC. The operational load of a cluster Ci is therefore regulated, at the cluster power setpoints Pⁱₖ, by the power controller PC, under the control of the supervision unit (SU).

Referring back to the general description of figure 2, a cluster C also comprises an electrolyzer process unit EPU that prepares the electrolyte for circulation into the stacks S and operates the separation of the produced gas from the liquid electrolyte that is extracted from the stacks S. The electrolyzer process unit EPU may comprise electrolyte pumps for the circulation of the electrolyte through the stacks, heat exchangers to cool it down, and liquid/gas separators.

In operation the supervision unit SU prepares and communicates at any given time k and to each cluster Ci a cluster power setpoint Pⁱₖ. Each of these setpoints is comprised between a nominal power of a cluster Ci and a standby power of this cluster Ci. Consequently, and depending on its current cluster power setpoint Pⁱₖ, nominal power and standby power, each cluster Ci presents a power up potential (the difference between the nominal power and its current power setpoint) and a power down potential (the difference between its current power setpoint and its standby power).

As mentioned in the introduction of the present disclosure, an installation P conform to the present invention is expected to provide energy flexibility to the electrical network NET to which it is connected and to meet that network's requirements, i.e. to operate the installation in a way that's beneficial to the electrical network NET. The electrical power drawn from the electrical network NET by the installation P may be modulated, i.e. increased or decreased by exploiting the power up and down potential of the electrolysis clusters, depending on the needs of the electrical network NET.

Several dimensions characterize these needs:
- Power potential: the quantity of power (up or down) that should be applied to the current power setpoint of the installation P;
- Dynamics: the expected temporal response to a required increase or decrease of the power drawn by the installation, e.g. time delay, response time, overshoot, stability, accuracy ... ;
- Energy content: the virtual stock of energy to be curtailed or stimulated, taking into account the process constraints and limitations, i.e. a given duration at a given power setpoint, time max at turndown, time max at hot standby, etc;
- Event rates: the frequency (or related quantity) at which the power modulations may be required.

The electrical network need is made manifest through a so-called "flexibility signal" FSₖ that may be provided to the installation P by the electrical network operator, for instance in the form of a curtail activation signal, or that may be derived from an electrical signal provided by the electrical network.

In some instances, the flexibility signal may be a so-called "Frequency Containment Reserve" (FCR) or "Primary Reserve" calculated from the frequency shift ΔFₖ from the nominal frequency of the electrical signal provided by the network, FSₖ = ΔFₖ/200 mHZ. Modulating the power drawn by the installation P according to this flexibility signal may help stabilize the electrical network frequency. Further signals, such as a so-called "secondary reserve" (aFRR signal - "automated Frequency Restoration Reserve") directly coming from the network operator or a Tertiary Reserve (mFRR signal - "manual Frequency Restauration Reserve) signal could also be used as a basis for modulating the power drawn by the installation.

In other instances, the flexibility signal may correspond to the available power provided by a generator (i.e. renewable power station) on the local electrical network NET to which both the generator and the installation P are connected.

In other instances, the flexibility signal may be derived from the power made available on the network for the installation P according to the power purchase agreement.

The flexibility signal may also combine the different approach : a curtail activation signal provided by the operator and modulation directly derived from the electrical network.

In all cases, the flexibility signal establishes at each instant k a raw value of the modulated power ΔP expected by the network NET with respect to the installation current power level Pₖ. It may be expressed in absolute value or in relative value, i.e. the modulated power ΔP divided by the nominal power Pₙₒₘ of the installation P or, preferably, divided by a committed power P_{comit} of the installation P. This committed power corresponds to the maximum power that the owner of the installation P commits to modulate to serve the network. This committed power may be fixed in time, or it may vary according to a pre-agreed schedule, or it may vary "on the spot".

According to the invention, the supervision unit SU is configured to address first and with great reactivity the "power potential" and "dynamics" dimensions of the electrical network NET flexibility needs (primary requirements). This is achieved by a modulation controller MOD of the supervision unit SU, that is modulating the electrical power drawn by the installation P from the electrical network NET, according to the evolution of the flexibility signal.

The two other dimensions mentioned above, "energy content" and "event rate" (secondary requirements), are decoupled from these immediate primary requirements, and taken care of, asynchronously, by a priority sequencer SEQ.

Figure 3 illustrates a supervision unit SU implementing such a network flexibility policy, comprising a modulation controller MOD to take into consideration the primary requirements synchronously with the flexibility signal FSₖ and a priority sequencer SEQ to address, asynchronously, the secondary requirements.

The modulation controller MOD operates synchronously with a clock whose period is typically comprised between 10 ms and 10 s, preferably between 100 ms and 1 s, the clock defining the successive sampling time k.

The modulation controller MOD comprises a conversion module CONV for determining, from the sampled flexibility signal FSₖ, the target modulated power ΔTPₖ (named "target power" in the rest of this description) of the installation P.

The conversion module CONV forms a conversion block that applies a transfer function to the flexibility signal FSₖ, to preprocess and/or filter it, or more simply apply a gain to this signal to provide in real time the target power ΔTPₖ signal. For instance, the conversion module CONV may filter out high frequency variations of the flexibility signal FSₖ. The transfer function may be linear or nonlinear.

Pursuing the description of the example represented on figure 3, the supervision unit SU further comprises, advantageously, a gradient module GM to determine a gradient value Gₖ of the target power signal ΔTPₖ. The gradient module GM is useful to select the adequate reactivity to the plant modulation, i.e. the "dynamics" dimensions of the electrical network NET flexibility needs.

The supervision unit SU further comprises a selector module SEL downstream the gradient module GM. Generally speaking, the selector module is configured to select, among a plurality of preset arrangements, the preset arrangement used to modulate the power setpoints ΔPⁱₖ of each cluster Cᵢ such that the overall modulated power corresponds to the target power ΔTPₖ .

A preset arrangement defines the available electrolysis clusters that should be used for modulating the power of the installation and the rule according to which the target power ΔTPₖ should be shared among the clusters. For instance, a preset arrangement may define a solicitation order of certain electrolysis clusters (i.e. which cluster should be successively modulated to match the target power) or the solicitation weight of each electrolysis clusters being part of the preset arrangements (i.e. how the target power should be dispatched among the clusters when all those clusters are simultaneously modulated).

In a preferred embodiment, one preset arrangement corresponds to a slow mode of operation and one preset arrangement corresponds to a fast mode of operation. The selector module SEL may select one of these two modes according to the gradient signal Gₖ.

For instance, if the gradient signal Gₖ, in absolute term, is below a predefined threshold, the selector module selects the slow mode of operation. In the slow mode of operation, as this is illustrated on the left part of figure 4 (with a preset arrangement made of four clusters), the modulated power setpoints ΔPⁱₖ of the clusters Cᵢ of the preset arrangement are successively set, according to the preset arrangement order, to match the target power ΔTPₖ defined by the flexibility signal. If the power potential, up or down, of a first selected cluster is exceeded, the power setpoint of a further cluster is set to match the target power ΔTPₖ.

If the gradient value, in absolute terms, is above the predefined threshold, the selector module SEL selects the fast mode of operation. In the fast mode of operation, as this is illustrated on the right part of figure 4, the power setpoints ΔPⁱₖ of a plurality of clusters are simultaneously set (possibly using the solicitation weights defined by the preset arrangement) to collectively match the target power ΔTPₖ defined by the flexibility signal.

The slow mode of operation forms a first preset arrangement that provides the list of ordered clusters whose power setpoints should be successively set to match the target power ΔTPₖ. The fast mode of operation forms a second preset arrangement that provides the list of clusters, and possibly the solicitation weights, whose power setpoints should simultaneously be updated to match the target power ΔTPₖ.

The slow and fast mode of operation constitute two preferred preset arrangements that allow adjusting the response of the installation P to the dynamics of the flexibility signal. But the invention may include different or additional preset arrangements.

In this general context, the selector module SEL is configured for executing the following steps at each instant k the step of selecting at least one cluster Cj among the plurality of clusters Ci of the installation P and applying a modulated power setpoint ΔPjₖ to the selected cluster(s) Cj according to a preset arrangement.

The modulation controller MOD reacts within one clock period to the flexibility signal to provide and apply a modulated power setpoint ΔPjₖ to the selected cluster(s). Since, the selecting and modifying are performed according to a preset arrangement, these steps can be performed rapidly, within one clock cycle.

The preset arrangement may take the form of a table, a matrix or to a function that relates a given target power ΔTPₖ to the cluster power setpoint P^{j}ₖ of the selected cluster Cj.

Note that all electrolysis cluster Ci may not be available at a given time to contribute to the power modulation, and they may not be in the same state or degradation level, or they may need to be placed in maintenance mode such that selecting which electrolysis cluster Ci should participate to the installation power modulation is not straightforward. Moreover, many different possibilities are available to match a required modulation. Sharing the power target among a plurality of clusters may be performed with equivalent or different solicitation weights. Depending on the objective pursued (e.g efficiency, production rate, cluster solicitation...), on the actual state of the cluster (operated close from their nominal power or close to their standby power) or on the variation and/or amplitude of the flexibility signal one may favor one approach or the other.

For this purpose, the supervision unit SU includes a priority sequencer SEQ to determine, asynchronously to the modulation controller MOD, which clusters should be incorporated into the preset arrangements, and possibly according to which order and according to which solicitation weights.

The priority sequencer SEQ is fed with the real-time process data collected from the various elements of the installation P and stored in the memory space MEM of the supervision unit SU.

The real-time process data are used by an optimization module OPT to establish a preset arrangement according to a given scenario. The given scenario may be requested and prepared by a scheduler SCH or by an operator of the installation.

For instance, a given scenario may correspond to a fast mode of operation: the optimization module OPT determine which electrolysis clusters should be solicited to provide a reaction to a rapid change in the need for modulating the power while optimizing chosen performance indices. The optimization module may also provide, along with the list of electrolysis clusters, the solicitation weights of each of these clusters.

A given scenario may also correspond to a slow mode of operation: the optimization module OPT determine which electrolysis clusters should be solicited to provide the power modulation for small variations in the need for modulating the power while optimizing chosen performance indices. The optimization module also provides, in this case, the order according to which each cluster should be successively activated.

More generally, the optimization module may comprise a numerical model of the installation P (a digital twin) and performs multicriteria optimization, as for instance specified in the scenario provided by the scheduler, based on the following performance indices:
- Installation efficiency (production of hydrogen per unit of energy): the installation efficiency is combining many different aspects (DC efficiency, Faraday efficiency, power conversion efficiency, auxiliary efficiency).
- H2 production rates: For higher hydrogen production rate, it is a better choice to target power fluctuations close to the nominal power setpoint of a electrolysis cluster.
- Imbalance among clusters: various imbalance indicators can be set up as energy imbalance (power integration), time of operation imbalance, operational voltage imbalance, etc. A limit is defined to the imbalance indicator which releases the regulating cluster (i.e. part of a preset arrangement) or resets the solicitation order of a preset arrangement.
- Hot Stand-by time: in case of standby of a cluster (setpoint below the turndown) the duration is monitored. The stopped cluster can be restarted and swapped to another cluster. The turndown time can also be monitored.
- Automated shifting: a scheduled roll out of clusters can be configured to rotate the power solicitations of stacks, for instance to equilibrate their degradation level. Automated shifts can also occur because of unexpected standby of a cluster, then resetting the order of the cluster (e.g. N-1 mode).

As already mentioned, the priority sequencer SEQ also include a scheduler module SCH. The scheduler module SCH exploits the optimization module OPT to prepare the preset arrangements that are used by the selector module SEL.

The scheduler module SCH stores the plurality of preset arrangements among which the selector module MOD selects the preset arrangement most suited to the current situation (for instance, select the fast or slow mode of operation according to the gradient signal, as mentioned before).

The scheduler may for instance provide regular request to the optimization module OPT for updating the preset arrangements, or for providing new preset arrangements.

Referring back to figure 3, the supervision unit also includes a regulator module REG to regulate the actual power Pₖ of the installation with respect to a target power setpoint TPₖ of the installation, adjusted with the target modulated power ΔTPₖ. The actual power Pₖ may be estimated from the collected data and/or measured and any discrepancy from the target power setpoint TPₖ adjusted with the target modulated power ΔTPₖ may be corrected by feedback control into the power controllers PC associated to the electrolysis clusters Ci. The regulator module REG typically stabilizes the installation power within a few minutes to 10 minutes or 1 hour.

By combining a synchronous modulation controller MOD, asynchronous priority sequencer SEQ and regulator module REG, the supervision unit SU is able to operate the installation P in accordance with the electrical network needs of flexibility without compromising excessively on the installation performances and stability of operation.

Other variations to the disclosed examples can be understood and effected by those skilled in the art in practicing the claimed invention, from a study of the drawings, the disclosure, and the appended claims.

## Claims

1. Water electrolysis installation (P) connected to an electrical network (NET), the installation (P) comprising a plurality of electrolysis clusters (Ci) operated at respective electrical power setpoints (Pⁱₖ), and a supervision unit (SU) for operating the installation (P) according to an electrical network flexibility signal (FSₖ), the supervision unit (SU) comprising:
- a modulation controller (MOD) for modulating synchronously the electrical power drawn by the installation (P) from the electrical network (NET), the modulation controller (MOD) comprising:
i. A conversion module (CONV) configured for determining in a first step, from the flexibility signal (FSₖ), a target modulated power (ΔTPₖ) of the installation (P);
ii. A selector module (SEL) configured for executing a second step of selecting at least one cluster (Cj) and of applying a modulated power setpoint (ΔPjₖ) to the selected cluster(s) (Cj) according to a preset arrangement ;
- A priority sequencer (SEQ) to establish, asynchronously to the modulation controller (MOD), the preset arrangement; and
- a regulator module (REG) to regulate the actual power (Pₖ) drawn by the installation.

2. Water electrolysis installation (P) according to the preceding claim wherein the selector module (SEL) is also configured for selecting the preset arrangement among a plurality of preset arrangements.

3. Water electrolysis installation (P) according to the preceding claim wherein the priority sequencer (SEQ) defines the electrolysis clusters being part of the plurality of preset arrangements.

4. Water electrolysis installation (P) according to the preceding claim wherein the priority sequencer (SEQ) defines the order of the electrolysis clusters being part of the plurality of preset arrangements.

5. Water electrolysis installation (P) according to the preceding two claims wherein the priority sequencer (SEQ) defines the weight of each electrolysis clusters being part of the plurality of preset arrangements.

6. Water electrolysis installation (P) according to any of claims 2 to 5 wherein the priority sequencer (SEQ) comprises an optimization module (OPT) to prepare the plurality of preset arrangements based on predefined performance indices of the installation.

7. Water electrolysis installation (P) according to the preceding claim wherein the priority sequencer (SEQ) comprises a scheduler (SCH) associated to the optimization module (OPT) to store the plurality of preset arrangements.

8. Water electrolysis installation (P) according to any of claim 2 to 7 wherein the plurality of preset arrangements comprises:
- a slow mode of operation in which the clusters (Cj) are successively selected and the current electrical power setpoints (P^{j}ₖ) are successively modified to match the target electrical power (ΔTPₖ); and
- a fast mode of operation in which the clusters (Cj) are simultaneously selected and the current electrical power setpoints (P^{j}ₖ) are simultaneously modified to match the target electrical power (ΔTPₖ).

9. Water electrolysis installation (P) according to the preceding claim wherein the selector module (SEL) is configured for selecting the preset arrangement according to a gradient signal (Gₖ).

10. Water electrolysis installation (P) according to any preceding claims wherein the first step comprises applying a gain or a transfer function to the flexibility signal (FSₖ) to determine the target modulated power (ΔTPₖ) of the installation.

11. Water electrolysis installation (P) according to any preceding claims wherein the flexibility signal (FSₖ) is provided by an operator of the electrical network (NET).

12. Water electrolysis installation (P) according to any preceding claims wherein the flexibility signal (FSₖ) is established from an electrical signal provided by the electrical network (NET).

13. Water electrolysis installation (P) according to any preceding claims wherein the regulator module (REG) uses a measure of the actual power (Pₖ) drawn by the installation (P) .

14. A method for modulating an electrical power drawn from an electrical network (NET) by a water electrolysis installation (P), the installation (P) comprising a plurality of electrolysis clusters (Ci) operated at respective electrical power setpoints (Pⁱₖ), and a supervision unit (SU) for operating the installation (P) according to an electrical network flexibility signal (FSₖ), the method comprising :
- modulating synchronously, by a modulation controller (MOD) of the supervision unit (SU), the electrical power drawn by the installation (P) from the electrical network (NET) by :
i. determining, in a first step, from the flexibility signal (FSₖ), a target modulated power (ΔTPₖ) of the installation (P);
ii. executing a second step of selecting at least one cluster (Cj) and of applying a modulated power setpoint (ΔPjₖ) to the selected cluster(s) (Cj) according to a preset arrangement;
- establishing, by a priority sequencer (SEQ) of the supervision unit (SU), the preset arrangement asynchronously to the modulation of the electrical power drawn by the installation (P); and
- regulating, by a regulator module (REG) of the supervision unit (SU), the actual power (Pₖ) drawn by the installation.
